(19) Europäisches Patentamt / European Patent Office / Office européen des brevets

(11) **EP 1 767 556 B1**

(12) **EUROPEAN PATENT SPECIFICATION**

(45) Date of publication and mention
of the grant of the patent:
**26.08.2009 Bulletin 2009/35**

(51) Int Cl.:
***C08F 297/08*** (2006.01)      ***C08L 23/08*** (2006.01)

(21) Application number: **05020627.5**

(22) Date of filing: **22.09.2005**

(54) **Polyethylene composition having a broad molecular weight distribution**

Polyethylenzusammensetzung mit breiter Molekulargewichtsverteilung

Composition de polyéthylène à large distribution de poids moléculaire

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**28.03.2007 Bulletin 2007/13**

(73) Proprietor: **Borealis Technology Oy**
**06010 Porvoo (FI)**

(72) Inventors:
• **Nilsen, Jorunn**
**3930 Porsgrunn (NO)**
• **Johansen, Arno**
**3960 Stathelle (NO)**
• **Äärilä, Jari**
**06100 Porvoo (NO)**

(74) Representative: **Saarenpää, Pilvi Sisko**
**Borealis Polymers Oy**
**IPR Department**
**P.O. Box 330**
**06101 Porvoo (FI)**

(56) References cited:
**EP-A- 1 555 292**          **US-B1- 6 455 642**

## Description

## Background of the Invention

The present invention deals with the use of polyethylene compositions for making cast films. In the cast film process the molten polymer is extruded through a flat die to one or more chill rolls where it is cooled, and then rolled up. This type of process is disclosed, among others in Raff and Doak, Crystalline Olefin Polymers, Part II, pages 450 - 453 (John Wiley & Sons, 1964) and in Vieweg, Schley and Schwarz, Kunststoff Handbuch, Band IV, Polyolefme, pages 402-408 (Carl Hanser Verlag, 1969).

## Field of the Invention

The present invention deals with the use of ethylene polymer compositions for the preparation of cast films. More specifically, the present invention deals with the use of ethylene polymer compositions that can be processed into films in a casting process with a good processability, minimum neck-in and reduced risk of draw resonance.

## Description of Related Art

The document WO 98/30628 discloses bimodal ethylene polymer compositions suitable for extrusion coating. The examples showed polymers having $MFR_2$ of 9 - 13 g/10 min, density of 930 - 942 $kg/m^3$.
The document WO 00/71615 discloses bimodal ethylene polymers suitable for injection moulding. The polymer comprises a low molecular weight component and a high molecular weight component. The examples disclose polymers with $MFR_2$ of 1.7 - 4.8 g/10 min, density of at least 953 $kg/m^3$ and the ratio of the amount of the low molecular weight component to the amount of the high molecular weight component of 40/60 or 60/40.

## Summary of the Invention

The aim of the invention is to provide the use of an ethylene polymer composition which has a very feasible balance between processability and mechanical properties for cast films.
Accordingly, the present invention provides the use of an ethylene polymer composition having a density of 935 to 950 $kg/m^3$, a dynamic viscosity $\eta_{0.05}$ measured at a frequency of 0.05 rad/s of 2000 to 7000 Pa·s and a shear thinning index $SHI_{1/100}$ of 5 to 11 and a melt index $MFR_2$ of 0.5 to 5.0 g/10 min. Due to said combination of properties the composition of the invention can be processed with high production rates to end products with good properties, e.g. in terms of appearance and transparency, which are very desirable in cast film applications.
The ethylene polymer composition has typically a weight average molecular weight, $M_w$, of from 70000 to 150000 g/mol.
The molecular weight distribution, defined as $M_w/M_n$, of the present ethylene polymer composition may vary depending on the end application, and the present ethylene composition with $M_w/M_n$ from 7 to 17 has particularly advantageous properties suitable for film applications, e.g. cast film applications.
The ethylene polymer composition is preferably a multimodal composition with respect to the molecular weight distribution and/or comonomer distribution. According to one preferable embodiment the ethylene polymer composition is at least a bimodal with respect to the molecular weight distribution, wherein the composition comprises a low molecular weight polymer component (A), which is an ethylene homopolymer or a copolymer of ethylene and one or more alpha-olefins having from 4 to 10 carbon atoms, said low molecular weight component (A) having a melt index $MFR_2$ of from 50 to 2000 g/10 min, preferably from 50 to 350 g/10 min, and a high molecular weight polymer component (B), which is a copolymer of ethylene and one or more alpha-olefins having from 4 to 10 carbons, said high molecular weight polymer component (B) having a melt index which is lower than that of component (A), whereby component (A) is in the amount of 41 to 59 % by weight and component (B) in amount of 59 to 41 % by weight based on the total amount of component (A) and (B). In one preferable embodiment the ethylene polymer composition is said bimodal composition. Alternatively, the composition may comprise at least three different ethylene polymer components, whereby the amount of the third or further components may vary considerably. It is herein understood that the bimodal ethylene composition may e.g. comprises a prepolymer fraction as the third component.
In case of a multimodal ethylene polymer composition said low molecular weight polymer component (A) has preferably a density of from 950 to 978 $kg/m^3$, and said high molecular weight polymer component (B) has a density which is lower than that of component (A).
Said low molecular weight polymer component (A) has typically a weight average molecular weight of from 15000 to 50000 g/mol. Preferably, said high molecular weight polymer component (B) has a weight average molecular weight of from 170000 to 80000 g/mol.
In case of a multimodal ethylene polymer composition the mixture of the ethylene polymer components may be a mechanical blend or a in situ blend or a mixture of a mechanical blend and an in-situ blend, wherein part of the components have been blended in situ and then mixed mechanically with the other component(s) of the composition. The in situ blend means that the components are mixed together during the polymerization process thereof the composition as described below. The meaning of the terms "in situ blend" and "mechanical blend" are well known in the filed.
The composition of the invention can further be mixed with other components. Such mixtures, i.e. blends, comprise an ethylene polymer composition as defined above together with other components are thus also provided. The other components may be other polymer components and/or additives, such as additives conventionally used in polymers. The choice and amounts depend naturally on the end applications thereof.

## Description of the Figures

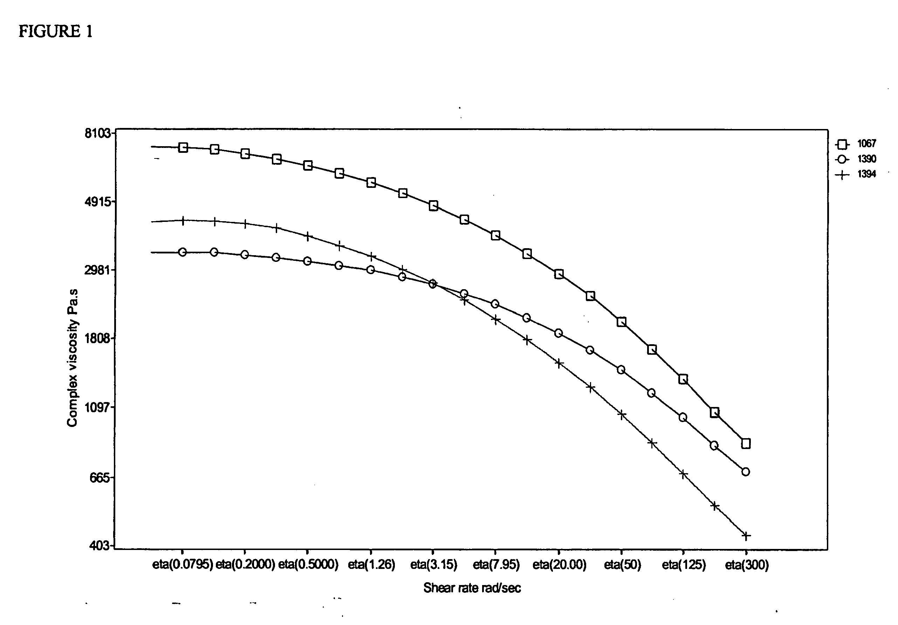

Figure 1 shows a viscosity plot of the polymer according to the invention. The dynamic viscosity is plotted as a function of the frequency in rad/s. The polymer of Example 1 is denoted as 1394 in the diagram and can be seen to have a higher shear thinning than the commercially available prior art polymers, denoted as 1067 and 1394. These correspond to Comparative Examples 1 and 2, respectively. This more pronounced shear thinning behaviour is advantageous in film extrusion, as it makes it possible to obtain high throughput rates in high shear rate processing conditions.

## Detailed Description of the Invention

### Polymer composition

According to the invention, the polymer composition may be unimodal or multimodal and is preferably multimodal comprising from 41 to 59 % by weight of the total weight of (A) and (B) the low molecular weight polymer component (A) and from 59 to 41 % by weight of the total weight of (A) and (B) the high molecular weight polymer component (B).

### Low molecular weight polymer component (A)

The low molecular weight polymer component (A) is a homopolymer of ethylene or a copolymer of ethylene and one or more alpha-olefin comonomers having from 4 to 10 carbon atoms. It has a melt index $MFR_2$ of from 50 to 2000 g/10 min, preferably from 50 to 500 g/10 min, more preferably from 50 to 350 g/10 min. Further, it has a density of from 950 to 978 kg/m$^3$, preferably from 955 to 978 kg/m$^3$. Preferably the low molecular weight polymer component is an ethylene homopolymer. It has preferably a weight average molecular weight of 15000 to 50000 g/mol, preferably from 20000 to 50000 g/mol.

### High molecular weight ethylene polymer component (B)

The high molecular weight polymer component (B) is a copolymer of ethylene and one or more alpha-olefins having from 4 to 10 carbon atoms. It has a melt index which is lower than that of component (A). Preferably, it has a melt index $MFR_2$ of from 0.03 to 1.0 g/10 min. It has a density lower than that of component (A). Preferably, it has a density of 900 to 930 kg/m$^3$. It preferably has a weight average molecular weight of 170000 to 800000 g/mol. Preferably, the high molecular weight component has a comonomer content of 3.3 to 5.5 % by mole, and especially preferably from 3.5 to 5.0 % by mole. In addition, the comonomer content of the high molecular weight component (B) is higher than the comonomer content of the low molecular weight component (A), preferably by at least 2.0 % by mole.

## Polymer composition

The polymer composition comprises from 41 to 59 %, preferably from 41 to 52 %, by weight of the combined weights of components (A) and (B) of the low molecular weight component (A) and from 59 to 41 %, preferably from 59 to 48 %, by weight of the combined weights of components (A) and (B) of the high molecular weight component (B). The composition has a melt index $MFR_2$ of from 0.5 to 5 g/10 min, preferably from 1 to 5 g/10 min, and a density of from 935 to 950 kg/m$^3$. Further, the composition preferably has a weight average molecular weight $M_w$ of from 70000 to 170000 g/mol, more preferably from 80000 to 150000 g/mol. It preferably has a molecular weight distribution defined as the ratio of the weight average molecular weight to the number average molecular weight, $M_w/M_n$, of from 7 to 17, preferably from 8 to 15. Further still, the polymer composition has a dynamic viscosity $\eta_{0.05}$ measured at a frequency of 0.05 rad/s of from 2000 to 7000 Pa.s, preferably from 3000 to 6500 Pa.s, especially preferably from 3000 to 5500 Pa·s. It has a shear thinning index $SHI_{1/100}$, defined as the ratio of two dynamic viscosities measured at the values of shear stress of 1 kPa and 100 kPa, of from 5 to 11. In addition, the polymer composition preferably has a comonomer content of 1.5 to 3.5 % by mole, more preferably from 1.5 to 3.0 % by mole.

According to a further embodiment, the invention provides the use of a blend comprising a multimodal ethylene polymer composition for making cast films, said composition comprising:

(i) from 41 to 59 % by weight of a low molecular weight polymer component (A), which is an ethylene homopolymer or a copolymer of ethylene and one or more alpha-olefins having from 4 to 10 carbon atoms, said low molecular weight component (A) having:

- a melt index $MFR_2$ of from 50 to 2000 g/10 min, preferably from 50 to 350 g/10 min,
- a density of from 950 to 978 kg/m$^3$, and
- a weight average molecular weight of 15000 to 50000 g/mol;

(ii) from 59 to 41 % by weight of a high molecular weight polymer component (B), which is a copolymer of ethylene and one or more alpha-olefins having from 4 to 10 carbons, said high molecular weight polymer component (B) having:

- a melt index which is lower than that of component (A),
- a density which is lower than that of component (A),
- a comonomer content of 3.3 to 5.5 % by mole, and
- a weight average molecular weight of from 170000 to 800000 g/mol,

the composition having

- a melt index $MFR_2$ of 0.5 to 5 g/10 min,
- a density of 935 to 950 kg/m$^3$,
- a weight average molecular weight of from 70000 to 150000 g/mol
- a molecular weight distribution of from 7 to 17
- a dynamic viscosity $\eta_{0.05}$ measured at a frequency 0.05 rad/s of 2000 to 7000 Pas
- a shear thinning index $SHI_{1/100}$ of 5 to 11.

The polymer composition may contain additives and adjuvants known in the art. Thus, it may contain antioxidants and stabilisers, such as Irganox 1010 and Irgaphos 168 that are commercial products of Ciba Specialty Chemicals. It may contain antistatic agents such as ethoxylated amines, ethoxylated amides and glycerol monostearates, antiblock agents such as talc or silica, slip agents such as oleamide and erucamide, acid neutralisers such as calcium stearate and zinc stearate, processing aids such as fluoroelastomers, and nucleating agents such as sodium benzoate. Suitable amounts of such additives are well known in the art. The person skilled in the art is able to select the suitable additives and their amounts to reach the desired properties of the composition and the films made thereof.

Use of the composition

The composition is used for making cast films. The composition can be extruded to films with good processability and high throughput with reduced risk of draw resonance and low neck-in. The resulting films are free of fish-eyes, melt fracture and other visual defects. Clear films can be produced from the composition.

**Production of the composition**

The polymer composition may be produced by any polymerisation method that is known in the art, such as in slurry, solution or gas phase polymerisation. The polymerisation can be a single or multistage polymerisation.

A multimodal, e.g. at least bimodal, polymer composition as defined above, which comprises at least two polymer components (A) and (B) with differing MWD and/or with differing comonomer contents, may be produced by blending each or part of the components in-situ during the polymerisation process thereof (so called in-situ process) or, alternatively, by blending mechanically two or more separately produced components in a manner known in the art.

Preferably the ethylene polymer composition is multimodal, whereby the invention further provides a process for producing a polymer composition comprising at least two different ethylene homo- or copolymer components (A) and (B) as defined above, wherein each component is produced by polymerising ethylene monomers, optionally together with one or more alpha-olefin comonomers, in the presence of a polymerisation catalyst in a single or a multistage polymerisation process. The components (A) and (B) are preferably produced in a multistage process using one or more polymerisation reactors, which may be the same or different, e.g. at least slurry-slurry, gas phase-gas phase or any combination of slurry and gas phase polymerisations. Each stage may be conducted in parallel or sequentially using same or different polymerisation method. In case of a sequential stages each of the components (A) and (B), may be produced in any order by carrying out the polymerisation in each step, except the first step, in the presence of the polymer component formed in the preceding step(s). Preferably, also the catalyst used in the preceding steps is present in the subsequent polymerisation step(s). Alternatively, further catalyst, which can be the same or different than that used in the preceding step, can be added in the subsequent step(s).

Catalyst

The catalyst is not critical; however, preferably a Ziegler-Natta polymerisation catalyst is used. Such catalysts comprise a transition metal component and an activator.

The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, EP 810235 and WO 99/51646. The catalysts disclosed in WO 95/35323 are especially useful as they are well suited in production of both a polyethylene having a high molecular weight and a polyethylene having a low molecular weight. Thus, especially preferably the transition metal component comprises a titanium halide, a magnesium alkoxy alkyl compound and an aluminium alkyl dihalide supported on an inorganic oxide carrier.

The activator is a compound which is capable of activating the transition metal component. Useful activators are, among others, aluminium alkyls and aluminium alkoxy compounds.

Especially preferred activators are aluminium alkyls, in particular aluminium trialkyls, such as trimethyl aluminium, triethyl aluminium and tri-isobutyl aluminium. The activator is typically used in excess to the transition metal component. For instance, when an aluminium alkyl is used as an activator, the molar ratio of the aluminium in the activator to the transition metal in the transition metal component is from 1 to 500 mol/mol, preferably from 2 to 100 mol/mol and in particular from 5 to 50 mol/mol.

It is also possible to use in combination with the above-mentioned two components different co-activators, modifiers and the like. Thus, two or more alkyl aluminium compounds may be used, or the catalyst components may be combined with different types of ethers, esters, silicon ethers and the like to modify the activity and/or the selectivity of the catalyst, as is known in the art.

Suitable combinations of transition metal component and activator are disclosed among others, in the examples of WO 95/35323.

It is preferred that the catalyst would produce in one-stage ethylene homopolymerisation at 80 °C a polymer having a molecular weight distribution $M_w/M_n$ of from about 3 to 7, when the resulting polymer has $MFR_2$ of about 1 g/10 min. This corresponds to $FRR_{21/2}$ of from about 25 to about 40. This would allow the preparation of the composition having the desired combination of viscosity and shear thinning index.

Prepolymerisation

In some cases it is preferred that the polymerisation stage is preceded by a prepolymerisation stage. In prepolymerisation a small amount of an olefin, preferably from 0.1 to 500 grams of olefin per one gram catalyst is polymerised. Usually the prepolymerisation takes place at a lower temperature and/or lower monomer concentration than the actual polymerisation. Typically, the prepolymerisation is conducted from 0 to 90 °C, preferably from 10 to 80 °C. Usually, but not necessarily, the monomer used in the prepolymerisation is the same that is used in the subsequent polymerisation stage(s). It is also possible to feed more than one monomer into the prepolymerisation stage. Descriptions of prepolymerisation can be found in e.g. WO 96/18662, WO 03/037941, GB 1532332, EP 517183, EP 560312 and EP 99774. Most suitably the polymerisation is conducted in two or more cascaded polymerisation stages where each polymer component is produced in a separate polymerisation stage and a polymer component produced in an earlier stage is present in each of the subsequent polymerisation stage(s).

Polymerisation stage to produce the low molecular weight component (A)

In the polymerisation stage producing the low molecular weight component (A) ethylene is homopolymerised or copolymerised with one or more alpha-olefin comonomers having from 4 to 10 carbon atoms. The polymerisation may take place in slurry, solution or gas phase.

The temperature in the polymerisation reactor needs to be sufficiently high to reach an acceptable activity of the catalyst. On the other hand, the temperature should not exceed the softening temperature of the polymer. The temperature may be selected from the range of 50 to 110 °C, preferably 75 to 105 °C and more preferably 75 to 100 °C.

The pressure in the reactor can be selected to fulfil the desired objectives: to reach a desired density of the reaction medium, to reach a suitable monomer concentration or to maintain the reactor contents in liquid phase. Therefore, the pressure depends on in which phase the reaction is conducted. Suitable pressure range in slurry polymerisation is 10 to 100 bar, preferably 30 to 80 bar. In gas phase polymerisation the pressure is from 5 to 50 bar, preferably from 10 to 30 bar.

If the low molecular weight component (A) is produced in slurry, ethylene and an inert diluent are introduced into the reactor together with the polymerisation catalyst. Hydrogen is introduced into the reactor to control the melt index of the polymer. Further, comonomer may be used to control the density of the polymer. The exact amounts of hydrogen and eventual comonomer are set by the type of catalyst used and the targeted MFR and density. Suitably, the ratio of hydrogen to ethylene in the fluid phase is from 50 to 800 mol/kmol and the ratio of the comonomer to ethylene is from 0 to 300 mol/kmol, preferably from 0 to 200 mol/kmol.

If the polymerisation is conducted as a slurry polymerisation, any suitable reactor type known in the art may be used. A continuous stirred tank reactor and a loop reactor are suitable examples of useful reactor types. Especially, a loop reactor is preferred because of its flexibility. Especially advantageous it is to conduct the polymerisation above the critical temperature and pressure of the fluid, in so called supercritical conditions. Such operation is disclosed in WO 92/12181.

The low molecular weight component (A) can also be produced in a gas phase reactor. In that case a gas mixture comprising monomer, an inert gas, hydrogen and optionally comonomer is introduced into the reactor. The catalyst is often introduced into a bed of polymer, where the polymerisation takes place. Again, hydrogen and optionally comonomer are introduced into the reactor to control the MFR and density of the polymer. Typically, the ratio of hydrogen to ethylene in the gas phase is from 500 to 15000 mol/kmol and the ratio of the comonomer to ethylene is from 0 to 300 mol/kmol, preferably from 0 to 150 mol/kmol.

Polymerisation stage to produce the high molecular weight component (B)

In the polymerisation stage producing the high molecular weight component (B) ethylene is copolymerised with one or more alpha-olefin comonomers having from 4 to 10 carbon atoms. The polymerisation may take place in slurry, solution or gas phase.

The temperature in the polymerisation reactor needs to be sufficiently high to reach an acceptable activity of the catalyst. On the other hand, the temperature should not exceed the softening temperature of the polymer. The temperature may be selected from the range of 50 to 110 °C, preferably 75 to 105 °C and more preferably 75 to 100 °C.

The pressure in the reactor can be selected to fulfil the desired objectives: to reach a desired density of the reaction medium, to reach a suitable monomer concentration or to maintain the reactor contents in liquid phase. Therefore, the pressure depends on in which phase the reaction is conducted. Suitable pressure range in slurry polymerisation is 10 to 100 bar, preferably 30 to 80 bar. In gas phase polymerisation the pressure is from 5 to 50 bar, preferably from 10 to 30 bar.

If the high molecular weight component (B) is produced in slurry, ethylene and an inert diluent are introduced into the reactor together with the polymerisation catalyst. Hydrogen is introduced into the reactor to control the melt index of the polymer. Further, comonomer is used to control the density of the polymer. The exact amounts of hydrogen and comonomer are set by the type of catalyst used and the targeted MFR and density.

Suitably, the ratio of hydrogen to ethylene in the fluid phase is from 5 to 150 mol/kmol and the ratio of the comonomer to ethylene is from 50 to 500 mol/kmol, preferably from 50 to 300 mol/kmol.

The high molecular weight component (B) can also be produced in a gas phase reactor. In that case a gas mixture comprising monomer, an inert gas, hydrogen and optionally comonomer is introduced into the reactor. The catalyst is often introduced into a bed of polymer, where the polymerisation takes place. Again, hydrogen and optionally comonomer are introduced into the reactor to control the MFR and density of the polymer. Typically, the ratio of hydrogen to ethylene in the gas phase is from 10 to 500 mol/kmol and the ratio of the comonomer to ethylene is from 100 to 600 mol/kmol, preferably from 150 to 500mol/kmol.

Thus the process for producing the above polymer composition, comprising at least (A) a low molecular weight ethylene (co)polymer component and (B) a high molecular weight copolymer component as defined above, includes preferably the steps of:

(a) polymerising in a slurry reactor zone, preferably a loop reactor, ethylene monomers, optionally together with one of more comonomers, preferably alpha-olefin comonomers, in the presence of a polymerisation catalyst to produce the first polymer component (preferably (A)),
and, optionally, transferring the reaction product of step (a) to a subsequent gas phase reactor zone,
(b) polymerising in a gas phase reactor zone alpha-olefin monomers, optionally together with one or more comonomers, in the presence of the reaction product of step (a) to produce a second polymer component (preferably (B)) for obtaining the polymer composition of the invention,

and recovering the obtained composition. It is known in the art to polymerise in at least two polymerisation stages to produce bimodal polyolefins, such as bimodal polyethylene, as disclosed in WO 92/12182 and EP 22376.

## Extrusion

After the polymer is collected from the reactor and the hydrocarbon residues are removed therefrom, the polymer is compounded and extruded to pellets. In this process step, any extruder known in the art may be used. It is preferred, however, to use a twin screw extruder. It may be of a co-rotating type, such as those produced by Werner & Pfleiderer having a designation ZSK, e.g. ZSK 90 having a 90 mm screw diameter. Alternatively, it may be of a counter-rotating type, such as those produced by Japan Steel Works, having a designation JSW CIM-P, e.g. CIM90P, having a 90 mm screw diameter, or LCM continuous mixer by Kobe Steel, such as LCM500H, or Farrel continuous mixer (FCM) by Farrel. It is especially preferred to use a counter-rotating twin screw extruder.

The extruder may contain one or more gear pumps and throttle valves. This equipment can be used to improve the homogeneity of the polymer composition or to increase the capacity of the extruder. Such a solution is disclosed, among others, by T. Fukui and R. Minato: "LCM Continuous Mixer/Gear Pump System for Polyolefin Resins", Society of Plastics Engineers Polyolefms VII International Conference, February 24-27, 1991, Wyndham Greenspoint Hotel, Houston, Texas.

Before the extrusion the polymer may be mixed with the desired additives.

## Description of Analytical Methods

### Molecular weight

Average molecular weights and molecular weight distribution were determined by size exclusion chromatography (SEC) using Waters Alliance GPCV2000 instrument with on-line viscometer. Oven temperature was 140 °C. Trichlorobenzene was used as a solvent.

In the cases where the average molecular weight could not be measured from the component, for instance when the component had been produced in the second polymerization stage in a two-stage polymerization process, the weight average molecular weight of the missing component can be calculated from the overall weight average molecular weight and that of the first component as follows:

$$M_{w,2} = \frac{M_{w,o} - w_1 \cdot M_{w,1}}{w_2}$$

and the number average molecular weight as follows:

$$M_{n,2} = \frac{w_2}{\dfrac{1}{M_{n,o}} - \dfrac{w_1}{M_{n,1}}}$$

where $M_w$ denotes the weight average molecular weight, subscripts o, 1 and 2 denote the overall composition, component 1 and component 2, respectively, and w denotes the weight fraction of the component in the total weight of components 1 and 2.

Melt flow rate

Melt flow rate of the polymer was determined according to ISO 1133 at 190 °C under a load of 2.16 kg ($MFR_2$).
In the cases where the melt flow rate could not be measured from the component, for instance when the component had been produced in the second polymerization stage in a two-stage polymerization process, the overall melt flow rate o can be calculated from the melt flow rates of the individual components as follows:

$$MFR_o = \left(\sum w_i \cdot MFR_i^a\right)^{1/a}$$

where MFR denotes the melt flow rate,
the subscripts o and i denote the overall composition and component i, respectively,
w denotes the weight fraction, and
a is a constant having a value of -0.314.

Density

Density of the polymer was determined according to ISO 1183-1987.
In the cases where the density could not be measured from the component, for instance when the component had been produced in the second polymerization stage in a two-stage polymerization process, the density of the missing component can be calculated from the overall density and that of the first component as follows:

$$\rho_2 = \frac{\rho_o - w_1 \cdot \rho_1}{w_2}$$

where w and the subscripts 1, 2 and o are as defmed above, and
ρ is the density.

Comonomer content

Comonomer content (wt %) was determined in a known manner with $^{13}$C-NMR on Bruker 400 MHz spectrometer at 130°C from samples dissolved in 1,2,4-trichlorobenzene (TCB)/benzene (with 90 parts per weight TCB and 10 parts per weight benzene).
In the cases where the comonomer content could not be measured from the component, for instance when the component had been produced in the second polymerization stage in a two-stage polymerization process, the comonomer content of the missing component can be calculated from the overall comonomer content and that of the first component as follows:

$$c_2 = \frac{c_o - w_1 \cdot c_1}{w_2}$$

where the subscripts 1, 2 and o are as defmed above, and
c is the comonomer content on weight basis.
The comonomer content in the weight basis can be calculated from the comonomer content in molar basis as follows:

$$c_w = \frac{1}{1 + \left(\dfrac{1}{c_n} - 1\right) \cdot \dfrac{MW_e}{MW_c}}$$

where the subscripts e and c denote ethylene and comonomer, respectively
$c_w$ denotes the weight fraction of comonomer units in the polymer,
$c_n$ denotes the mole fraction of comonomer units in the polymer, and
MW denotes the molecular weight.

Dynamic viscosity and Shear thinning index

Dynamic rheological measurements were carried out with a rheometer, namely Rheometrics RDA-II, on compression moulded samples under nitrogen atmosphere at 190 °C using 25 mm diameter plates and plate and plate geometry with a 1.2 mm gap. The oscillatory shear experiments were done within the linear viscosity range of strain at frequencies from 0.05 to 300 rad/s (ISO 6721-1). Five measurement points per decade are made.
The values of storage modulus (G'), loss modulus (G") complex modulus (G*) and complex viscosity ($\eta^*$) were obtained as a function of frequency (m). $\eta_{100}$ is used as abbreviation for the complex viscosity at the frequency of 100 rad/s.

Shear thinning index (SHI), which correlates with MWD and is independent of $M_w$, was calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "The influence of molecular structure on some rheological properties of polyethylene", Heino, E.L., Borealis Polymers Oy, Porvoo, Finland, Annual Transactions of the Nordic Rheology Society, 1995.)

SHI value is obtained by calculating the complex viscosities $\eta^*(1\ kPa)$ and $\eta^*(100\ kPa)$ at a constant value of complex modulus of 1 kPa and 100 kPa, respectively. The shear thinning index $SHI_{1/100}$ is defmed as the ratio of the two viscosities $\eta^*(1\ kPa)$ and $\eta^*(100\ kPa)$, i.e. $\eta(1)/\eta(100)$.

The definitions and measurement conditions are also described in detail on page 8 line 29 to page 11, line 25 of WO 00/22040.

It is usually not practical to measure the complex viscosity at the value of frequency of 0.05 rad/s directly. The value can be extrapolated by conducting the measurements down to the frequency of 0.126 rad/s, drawing the plot of complex viscosity vs. frequency, drawing a best-fitting line through the five points corresponding to the lowest values of frequency and reading the viscosity value from this line.

**Examples**

**Example 1**

Into a loop reactor having a volume of 500 $dm^3$ were continuously introduced propane, ethylene and hydrogen. In addition, a polymerisation catalyst prepared otherwise according to Example 3 of WO 95/35323 except that the average particle size of the silica carrier was 25 μm was introduced into the reactor together with triethyl aluminium so that the molar ratio of aluminium in the activator to titanium in the solid component was 15. The loop reactor was operated at 95 °C temperature and 60 bar pressure. Ethylene content in the fluid phase in the slurry reactor was 5.5 % by mole and the ratio of hydrogen to ethylene was 360mol/kmol. The production rate of polymer was 30 kg/h. The polymer produced in the loop reactor had an $MFR_2$ of 250 g/10 min and a density of 973 $kg/m^3$.

The slurry was withdrawn from the loop reactor by using the settling legs and directed to a flash where the pressure was reduced to 3 bar. The polymer containing a minor amount of residual hydrocarbons was directed to a fluidised bed gas phase reactor, where also additional ethylene, 1-butene comonomer and hydrogen were added, together with nitrogen as an inert gas. The gas phase reactor was operated at a temperature of 82 °C and a pressure of 20 bar. The ethylene partial pressure in the fluidising gas in the reactor was 3.5 bar, the hydrogen to ethylene ratio was 83 mol/kmol and the ratio of 1-butene to ethylene was 360 mol/kmol. The production rate of the polymer in the gas phase reactor was 37 kg/h, so that the production split between the loop and gas phase reactors was 45/55. The total production rate was thus 67 kg/h.

The polymer was mixed with 750 ppm of Doverphos 9228 and 750 ppm of calcium stearate and extruded into pellets in a counterrotating twin-screw extruder JSW CIM90P. The polymer pellets had a density of 940 $kg/m^3$ and an $MFR_2$ of 3.0 g/10 min. They further had $M_w$ of 115000, $M_n$ of 10000 and MWD thus 12. The dynamic viscosity $\eta_{0.05}$ was 4250 Pa·s and $SHI_{1/100}$ was 7.0. The 1-butene content of the polymer was 3.8 % by weight.

**Comparative Example 1**

A commercially available ethylene polymer composition was analysed in terms of the rheology. The dynamic viscosity $\eta0.05$ was 7370 Pa·s and $SHI_{1/100}$ was 3.4.

**Comparative Example 2**

Another commercially available ethylene polymer composition was analysed in terms of the rheology. The dynamic viscosity $\eta_{0.05}$ was 3380 Pa·s and $SHI_{1/100}$ was 2.7.

**Claims**

1. The use of an ethylene polymer composition having a density of 935 to 950 $kg/m^3$, a dynamic viscosity 110.05 measured at a value of the frequency of 0.05 rad/s of 2000 to 7000 Pa-s and a shear thinning index $SHI_{1/100}$ of 5 to 11 and a melt index $MFR_2$ of 0.5 to 5.0 g/10 min for making cast films.

2. The use according to claim 1, wherein the composition has a weight average molecular weight, $M_w$, of from 70000 to 150000 g/mol.

3. The use according to claim 1 or 2 wherein the composition has a molecular weight distribution, defined as $M_w/M_n$, of from 7 to 17.

4. The use according to any one of claims 1 to 3, wherein the composition comprises a low molecular weight polymer component (A), which is an ethylene homopolymer or a copolymer of ethylene and one or more alpha-olefins having from 4 to 10 carbon atoms, said low molecular weight component (A) having a melt index $MFR_2$ of from 50 to 2000 g/10 min, preferably from 50 to 350 g/10 min, and a high molecular weight polymer component (B), which is a copolymer of ethylene and one or more alpha-olefins having from 4 to 10 carbons, said high molecular weight polymer component (B) having a melt index which is lower than that of component (A), whereby the amount of component (A) is of 41 to 59 % by weight and the amount of component (B) of 59 to 41 % by weight based on the total amount of component (A) and (B).

5. The use according to claim 4, wherein said low molecular weight polymer component (A) has a density of from 950 to 978 kg/m$^3$, and said high molecular weight polymer component (B) has a density which is lower than that of component (A).

6. The use according to claim 4 or 5, wherein said low molecular weight polymer component (A) has a weight average molecular weight of from 15000 to 50000 g/mol, and said high molecular weight polymer component (B) has a weight average molecular weight of from 170000 to 80000 g/mol.

7. The use of a blend comprising an ethylene polymer composition according to any one of claims 1 to 6 for making cast films.

8. The use according to claim 7, wherein the blend comprises a multimodal ethylene polymer composition, said composition comprising:

(i) from 41 to 59 % by weight of a low molecular weight polymer component (A), which is an ethylene homopolymer or a copolymer of ethylene and one or more alpha-olefins having from 4 to 10 carbon atoms, said low molecular weight component (A) having:

- a melt index MFR$_2$ of from 50 to 2000 g/10 min, preferably from 50 to 350 g/10 min,
- a density of from 950 to 978 kg/m$^3$,
- a weight average molecular weight of 15000 to 50000 g/mol;

(ii) from 59 to 41 % by weight of a high molecular weight polymer component (B), which is a copolymer of ethylene and one or more alpha-olefins having from 4 to 10 carbons, said high molecular weight polymer component (B) having:

- a melt index which is lower than that of component (A),
- a density which is lower than that of component (A)
- a comonomer content of 3.3 to 5.5 % by mole,
- a weight average molecular weight of from 170000 to 800000 g/mol,

the composition having

- a melt index MFR$_2$ of 0.5 to 5 g/10 min,
- a density of 935 to 950 kg/m$^3$,
- a weight average molecular weight of from 70000 to 150000 g/mol
- a molecular weight distribution of from 7 to 17
- a dynamic viscosity $\eta_{0·05}$ measured at a frequency of 0.05 rad/s of 2000 to 7000 Pas
- a shear thinning index SHI$_{1/00}$ of 5 to 11.

**Patentansprüche**

1. Verwendung einer Ethylenpolymerzusammensetzung, welche eine Dichte von 935 bis 950 kg/m$^3$, eine dynamische Viskosität $\eta_{0,05}$ von 2000 bis 7000 Pa·s, gemessen bei einem Frequenzwert von 0,05 rad/s, einen Scherentzähungsindex SHI$_{1/100}$ von 5 bis 11 und einen Schmelzindex MFR$_2$ von 0,5 bis 5,0 g/10min aufweist, zur Herstellung von Flachfolien.

2. Verwendung nach Anspruch 1, wobei die Zusammensetzung ein Gewichtsmittel-Molekulargewicht M$_w$ von 70000 bis 150000 g/mol aufweist.

3. Verwendung nach Anspruch 1 oder 2, wobei die Zusammensetzung eine Molekulargewichtsverteilung, definiert als M$_w$/M$_n$, von 7 bis 17 aufweist.

4. Verwendung nach einem der Ansprüche 1 bis 3, wobei die Zusammensetzung eine Polymerkomponente mit niedrigem Molekulargewicht (A) umfasst, bei welcher es sich um ein Ethylen-Homopolymer oder ein Copolymer aus Ethylen und einem oder mehreren $\alpha$-Olefinen mit 4 bis 10 Kohlenstoffatomen handelt, wobei die Komponente mit niedrigem Molekulargewicht (A) einen Schmelzindex MFR$_2$ von 50 bis 2000 g/10min, vorzugsweise 50 bis 350 g/10min, aufweist, und eine Polymerkomponente mit hohem Molekulargewicht (B) umfasst, bei welcher es sich um ein Copolymer aus Ethylen und einem oder mehreren $\alpha$-Olefinen mit 4 bis 10 Kohlenstoffatomen handelt, wobei die Komponente mit hohem Molekulargewicht (B) einen Schmelzindex aufweist, der niedriger ist als der der Komponente (A), wobei die Menge der Komponente (A) 41 bis 59 Gewichts-% und die Menge der Komponente 59 bis 41 Gewichts-% beträgt, bezogen auf die Gesamtmenge der Komponenten (A) und (B).

5. Verwendung nach Anspruch 4, wobei die Polymerkomponente mit niedrigem Molekulargewicht (A) eine Dichte von 950 bis 978 kg/m$^3$ aufweist und die Polymerkomponente mit hohem Molekulargewicht (B) eine Dichte aufweist, die niedriger ist als die der Komponente (A).

**6.** Verwendung nach Anspruch 4 oder 5, wobei die Polymerkomponente mit niedrigem Molekulargewicht (A) ein Gewichtsmittel-Molekulargewicht von 15000 bis 50000 g/mol aufweist und die Polymerkomponente mit hohem Molekulargewicht (B) ein Gewichtsmittel-Molekulargewicht von 170000 bis 800000 g/mol aufweist.

**7.** Verwendung eines Gemisches, welches eine Ethylenpolymerzusammensetzung nach einem der Ansprüche 1 bis 6 umfasst, zur Herstellung von Flachfolien.

**8.** Verwendung nach Anspruch 7, wobei das Gemisch eine multimodale Ethylenpolymerzusammensetzung umfasst, wobei die Zusammensetzung das Folgende umfasst:

(i) 41 bis 59 Gewichts-% einer Polymerkomponente mit niedrigem Molekulargewicht (A), bei welcher es sich um ein Ethylen-Homopolymer oder ein Copolymer aus Ethylen und einem oder mehreren $\alpha$-Olefinen mit 4 bis 10 Kohlenstoffatomen handelt, wobei die Komponente mit niedrigem Molekulargewicht (A) das Folgende aufweist:

- einen Schmelzindex $MFR_2$ von 50 bis 2000 g/10min, vorzugsweise 50 bis 350 g/10min,
- eine Dichte von 950 bis 978 $kg/m^3$,
- ein Gewichtsmittel-Molekulargewicht von 15000 bis 50000 g/mol.

(ii) 59 bis 41 Gewichts-% einer Polymerkomponente mit hohem Molekulargewicht (B), bei welcher es sich um ein Copolymer aus Ethylen und einem oder mehreren $\alpha$-Olefinen mit 4 bis 10 Kohlenstoffatomen handelt, wobei die Komponente mit hohem Molekulargewicht (B) das Folgende aufweist:

- einen Schmelzindex, welcher niedriger ist als der der Komponente (A),
- eine Dichte, welche niedriger ist als die der Komponente (A),
- einen Comonomeranteil von 3,3 bis 5,5 Mol-%,
- ein Gewichtsmittel-Molekulargewicht von 170000 bis 800000 g/mol,

wobei die Zusammensetzung das Folgende aufweist:

- einen Schmelzindex $MFR_2$ von 0,5 bis 5 g/10min,
- eine Dichte von 935 bis 950 $kg/m^3$,
- ein Gewichtsmittel-Molekulargewicht von 70000 bis 150000 g/mol.
- eine Molekulargewichtsverteilung von 7 bis 17,
- eine dynamische Viskosität $\eta_{0,05}$ von 2000 bis 7000 Pa·s, gemessen bei einem Frequenzwert von 0,05 rad/s,
- einen Scherentzähungsindex $SHI_{1/100}$ von 5 bis 11.

**Revendications**

**1.** Utilisation d'une composition de polymère d'éthylène ayant une densité de 935 à 950 kg /$_m^3$ une viscosité dynamique $\eta_{0,05}$ mesurée à une valeur de la fréquence de 0,05 rad/s de 2000 à 7000 Pa.s et un indice de fluidification par cisaillement $SHI_{1/100}$ de 5 à 11 et un indice de fusion $MFR_2$ de 0,5 à 5,0 g/10 minutes pour la fabrication de films coulés par extrusion.

**2.** Utilisation selon la revendication 1, dans laquelle la composition a une masse moléculaire moyenne en poids, $M_w$, de 70 000 à 150 000 g/mole.

**3.** Utilisation selon la revendication 1 ou 2, dans laquelle la composition a une distribution de la masse moléculaire, définie comme $M_w/M_n$, de 7 à 17.

**4.** Utilisation selon l'une quelconque des revendications 1 à 3, dans laquelle la composition comprend un composant polymère (A) de faible masse moléculaire, qui est un homopolymère d'éthylène ou un copolymère d'éthylène et une ou plusieurs alpha-oléfines ayant de 4 à 10 atomes de carbone, ledit composant de faible masse moléculaire (A) ayant un indice de fusion $MRF_2$ de 50 à 2 000 g/10 minutes, de préférence de 50 à 350 g/10 minutes, et un composant polymère (B) de masse moléculaire élevée, qui est un copolymère d'éthylène et une ou plusieurs alpha-oléfines ayant de 4 à 10 atomes de carbone, ledit composant polymère (B) de masse moléculaire élevée ayant un indice de fusion qui est inférieur à celui du composant (A), moyennant quoi la quantité de composant (A) est de 41 à 59 % en poids et la quantité de composant (B) de 59 % à 41 % en poids par rapport à la quantité totale des composants (A) et (B).

**5.** Utilisation selon la revendication 4, dans laquelle ledit composant polymère (A) de faible masse moléculaire a une densité de 950 à 978 $kg/m^3$, et ledit composant polymère (B) de masse moléculaire élevée a une densité qui est inférieure à celle du composant (A).

**6.** Utilisation selon la revendication 4 ou 5, dans laquelle ledit composant polymère (A) de faible masse moléculaire a une masse moléculaire moyenne en poids de 15 000 à 50 000 g/mole, et ledit composant polymère (B) de masse moléculaire élevée a une masse moléculaire moyenne en poids de 170 000 à 800 000 g/mole.

7. Utilisation d'un mélange comprenant une composition de polymère d'éthylène selon l'une quelconque des revendications 1 à 6 pour la fabrication de films coulés par extrusion.

8. Utilisation selon la revendication 7, dans laquelle le mélange comprend une composition de polymère d'éthylène multimodale, ladite composition comprenant :

(i) de 41 à 59 % en poids d'un composant polymère de faible masse moléculaire (A), qui est un homopolymère d'éthylène ou un copolymère d'éthylène et une ou plusieurs alpha-oléfines ayant de 4 à 10 atomes de carbone, ledit composant (A) de faible masse moléculaire ayant :

- un indice de fusion $MFR_2$ de 50 à 2 000 g/10 minutes, de préférence de 50 à 350 g/ 10 minutes,
- une densité de 950 à 978 kg/m$^3$,
- une masse moléculaire moyenne en poids de 15 000 à 50 000 g/mole ;

(ii) de 59 à 41 % en poids d'un composant polymère (B) de masse moléculaire élevée, qui est un copolymère d'éthylène et une ou plusieurs alpha-oléfines ayant de 4 à 10 atomes de carbone, ledit composant polymère (B) de masse moléculaire élevée ayant :

- un indice de fusion qui est inférieur à celui du composant (A),
- une densité qui est inférieure à celle du composant (A),
- une teneur en comonomère de 3, 3 à 5,5% en moles,
- une masse moléculaire moyenne en poids de 170 000 à 800 000 g/mole,

la composition ayant

- un indice de fusion $MFR_2$ de 0,5 à 5 g/10 minutes,
- une densité de 935 à 950 kg/m$^3$,
- une masse moléculaire moyenne en poids de 70 000 à 150 000 g/mole,
- une distribution de la masse moléculaire de 7 à 17,
- une viscosité dynamique $\eta_{0,05}$ mesurée à une fréquence de 0,05 rad/s de 2000 à 7000 Pas,

- un indice de fluidification par cisaillement $SH_1/_{1000}$ de 5 à 11.

FIGURE 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9830628 A
- WO 0071615 A
- WO 9535323 A
- WO 0155230 A
- EP 810235 A
- WO 9951646 A
- WO 9618662 A
- WO 03037941 A
- GB 1532332 A
- EP 517183 A
- EP 560312 A
- EP 99774 A
- WO 9212181 A
- WO 9212182 A
- EP 22376 A
- WO 0022040 A

**Non-patent literature cited in the description**

- **Raff ; Doak.** Crystalline Olefin Polymers. John Wiley & Sons, 1964, 450-453
- **Vieweg ; Schley ; Schwarz.** Kunststoff Handbuch, Band IV. Carl Hanser Verlag, 1969, 402-408
- **T. FUKUI ; R. MINATO.** LCM Continuous Mixer/Gear Pump System for Polyolefin Resins. *Society of Plastics Engineers Polyolefms VII International Conference,* 24 February 1991
- **HEINO, E.L. ; LEHTINEN, A. ; TANNER J ; SEPPÄLÄ, J. ; NESTE OY.** Rheological characterization of polyethylene fractions. *Theor. Appl. Rheol., Proc. Int. Congr. Rheol,* 1992, vol. 1, 360-362
- **HEINO, E.L.** The influence of molecular structure on some rheological properties of polyethylene. *Annual Transactions of the Nordic Rheology Society,* 1995